# EUROPEAN PATENT APPLICATION

(11) **EP 2 458 701 A1**
(43) Date of publication of application: **30.05.2012**
(21) Application number: 11167799.3
(22) Date of filing: 27.05.2011
(51) Int. Cl.: H02G 5/06, H01F 27/04, H01B 17/28

(54) **High voltage bushing**

(71) Applicant: ABB Technology Ltd, 8050 Zürich (CH)
(72) Inventor: Emilsson, Davis, SE-771 35 LUDVIKA (SE); Eriksson, Thomas, SE-771 31 LUDVIKA (SE)
(74) Representative: Ahrengart, Kenneth

(57) **Abstract**

A high voltage gas insulated bushing (18) for guiding an electrical current through a wall, the bushing comprising; a conductor (11), and a tubular central part (14) adapted to be fixated to the wall, and a first insulating tube (20) having one end attached to one side of the central part (14) and the other end provided with a first end piece (8) for fixating (3) the conductor to the bushing, and a second insulating tube (21) having one end attached to an opposite side of the central part and the other end provided with a second end piece (9) for fixating (4) the conductor to the bushing, and the conductor (11) extending through the insulating tubes and the central part (14). The center of the central part (14) of the bushing is arranged at a distance from a line between the fixation point (3) of the conductor on the first end piece (8) and the fixation point (4) of the conductor on second end piece (9).

## Description

### Technical field

The present invention relates to the field of high voltage technology, and in particular to gas insulated high voltage bushings.

### Background

Gas insulated High Voltage bushings are used for carrying current at high potential through a wall, often referred to as a grounded plane. The wall is at a different potential than the current path. Bushings are designed to electrically insulate a high voltage conductor, located inside the bushing, from the grounded plane. The grounded plane can for example be a transformer tank or a wall, such as for example a High Voltage Direct Current (HVDC) valve hall wall. An example of a gas insulated bushing is the GGFL, air to air bushing, by ABB. High voltage means voltages above 50 kV and preferably above 400 kV.

In a gas filled bushing with a free hanging conductor, the maximum deflection of the conductor in the longitudinal center of the bushing influences the inner diameter of the bushing which affects the outer diameter of the bushing. In order to prevent flashovers, the higher the maximum deflection is the larger the inside diameter of the bushing has to be. Inside of the bushing, different field control shields are arranged to handle the electrical fields. The field control shields will not work as designed if the conductor is not in the radial center or close to the radial center of the bushing. There is a need when designing very long bushings to adapt them to the deflection of the conductor.

The static deflection of the conductor is generated by gravity and mass of the conductor itself. The conductor in the bushing is in the form of a tube fixed in both ends. The deflection of a horizontally or near horizontally placed tube is dependent on material constants of the conductor tube, length, wall thickness and diameter of the tube.

The conductor is dimensioned to conduct a current i.e. for a given current and resistivity, the cross sectional area of the conductor is given. For a conductor of a given outer diameter, the wall thickness will be determined by the cross sectional area of the tube. The length is set by the length of the bushing which is determined by external electric requirements e.g. voltages and flashover distances. For large currents it is in principle only possible to use copper or aluminium or alloys thereof in the conductor. This will determine the material parameter which will then set the maximum stiffness of the material. Almost all material parameters and construction parameters are set by the electric requirements of the bushing.

The problem of static deflection of the conductor is increasingly important with increasing voltages and very high power distributions that equipment has to handle. The increasing voltages leads to longer and longer bushings.

### Summary of the invention

Various aspects of the invention are set out in the accompanying claims.

The present invention provides a bushing that has a form that is adapted to the static deflection of the free hanging conductor at the center of the bushing.

According to the present invention there is provided a gas insulated bushing for guiding an electrical current in a conductor through a wall or grounded plane comprising; a conductor, and a tubular central part adapted to be fixated to the wall, and a first insulating tube having one end attached to one side of the central part and the other end provided with a first end piece for fixating the conductor to the bushing, and a second insulating tube having one end attached to an opposite side of the central part and the other end provided with a second end piece for fixating the conductor to the bushing, and the conductor extending through the insulating tubes and the central part. The center of the central part is arranged at a distance from a line between the fixation point of the conductor on the first end piece and the fixation point of the conductor on second end piece.

The advantage of this embodiment is that configuration of the bushing is adapted compensate the naturally occurring static deflection of the free hanging conductor in the bushing. It ensures that the conductor, when the bushing is attached to a wall, passes through the central part in a better position than if the center of the central part is on a straight line with the fixation points.

According to an embodiment of the invention, the distance between the center of the central part and the line between the fixation points of the conductor on the end pieces (3, 4) is between 3cm and 50cm.

The static deflection of a conductor in a gas insulated bushing depends on a number of things; length of unsupported conductor, stiffness and weight of the conductor, angle of the installed bushing, stiffness of the fixation point, etc. Using the calculated deflection one can determine the distance between the center of the central part and the line between the fixation points of the conductor on the end pieces (3, 4).

According to an embodiment of the invention, the insulation tubes (20, 21) are straight tubes

According to an embodiment of the invention, the center of the central part and radial center of the end pieces (8, 9) are on a straight line and at least one of the fixation point of the conductor on the end piece is not on the radial center of the end piece (8, 9).

Medium length high voltage bushings where the static deflection is small compared to the diameter of the insulating tube, the passage of the conductor through the central part can be adapted by shifting the fixation point from the radial center of the end pieces towards the edge. If the fixation point is shifted on both sides the shift has to be in the same direction. In the installed bushing, the shift of the fixation point is upward from the radial center of the end piece.

According to an embodiment of the invention, the insulation tubes (20, 21) are conical tubes with the smallest diameter at the end pieces (8, 9).

To save weight, especially at the ends of the bushing, the insulated tubes can be conical. This reduces the size and weight of the end pieces.

According to an embodiment of the invention, the longditudal centerlines insulating tubes are arranged at an angle (α) less than 180 deg.

Arranging the insulating tubes with an angle will place the center of the central part at a distance from a line between the fixation points. The fixation points should preferably be at the radial center of the end pieces.

According to an embodiment of the invention, the angle (α) between the longditudinal center lines of the insulating tubes is 170-179,7 degrees.

It is trivial to calculating optimal angle once one have calculated the expected deflection at the central part.

According to an embodiment of the invention, the angle (α) between the longditudinal center lines of the insulating tubes (20,21) is selected to compensate the static deflection of the conductor (11) so that the conductor passes through the radial center at the central part (14) in at least one point.

According to an embodiment of the invention, the insulating tubes are curved to compensate the static deflection of the conductor (11).

The insulating tubes can be a curve shape that is adapted to follow the shape of the free hanging conductor.

According to an embodiment of the invention, the insulating tubes are designed so that longditudal center line of the tube approximately follows a catenary curve.

The catenary curve or chain curve is the shape of a hanging chain between two fixed points. The advantage of this is that the conductor is positioned close to the center of the bushing at the whole length of the bushing

### Brief description of the drawings

The drawings constitute a part of this specification and include exemplary embodiments to the invention, which may be embodied in various forms.
Fig 1 shows a gas insulated bushing according to the prior art.
Fig 2 shows the problem that the present invention tries to solve.
Fig 3 shows an embodiment of the present invention.
Fig 4 shows another embodiment of the present invention.
Fig 5 shows another embodiment of the present invention.
Fig 6 shows another embodiment of the present invention.
Fig 7 shows another embodiment of the present invention.
Fig 8 shows another embodiment of the present invention.

### Detailed description

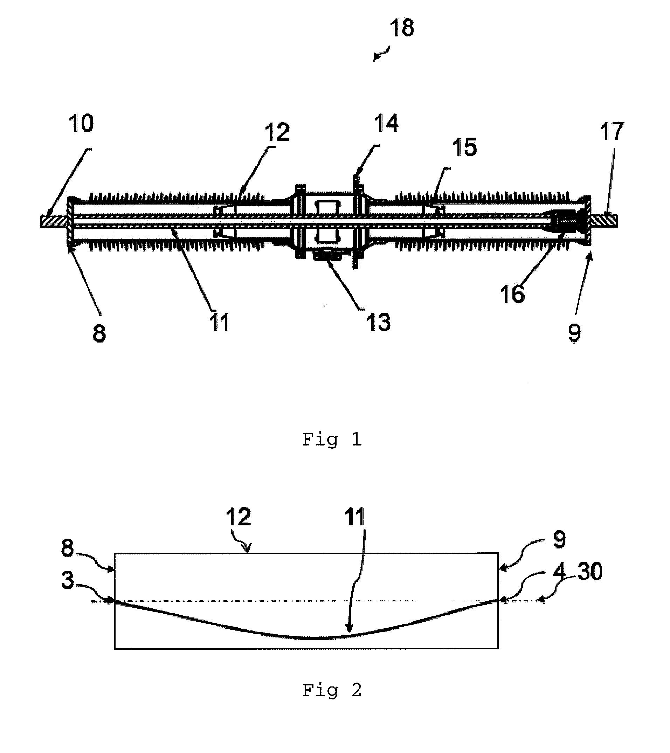

Fig 1 shows a gas insulated bushing 18 according to the prior art where the present invention could be used. The bushing comprises a central part 14, also known as wall flange or intermediate flange, which could be made from welded aluminium, fitted with two insulators 12, one for each side of the central part 14. Grading of the electrical field is accomplished by internal shields 15 which could be conical aluminium shields. The insulating tubes can be made of a glass fiber reinforced epoxy in the form of a tube that can be covered by weather sheds made of silicone rubber or other suitable material. The tubes are manufactured in one piece and equipped with end flanges 8, 9 at both ends, the end flanges 8, 9 can be glued on and made from cast aluminium. The design gives a rigid bushing with excellent mechanical properties. The hollow conductor 11, extends through the insulating tubes and the central part 14 and is fixed at both ends on the end flanges 8, 9 at a fixation point and the conductor is unsupported between the fixation points. The bushing can be filled with isolating gas e.g. SF6 (sulfur hexafluoride). The isolating gas can be at atmospheric pressure or at an over pressure. The bushing is practically rotationally symmetric.

Fig 2 shows the problem, not in scale, that the present invention tries to solve. The conductor 11 is fastened on the end flange 8, 9 at fixation points 3, 4. The fixation of onto the end flanges 8, 9 can be such that the fixation points can support some bending moment.
The dashed line 30 is the longitudinal center line of the bushing and it is also the location of the conductor without any static deflection caused by gravity.
With static deflection, the conductor 11 will follow another path than that of the centerline 30. Dependent on the length of the bushing and thereby the unsupported length of the conductor, the amount static deflection at the longitudinal center of the bushing will be different. As the length of the bushing increases, the deflection at the longitudinal center of the bushing will increase dramatically. For bushings longer than 10 m the deflection might be so large that the voltage grading shields 15 might not work properly, causing e.g. short circuits, or that the diameter of the bushing will make the bushing very expensive to manufacture or transport or/and cause additional problems due to the weight of the large diameter bushing.

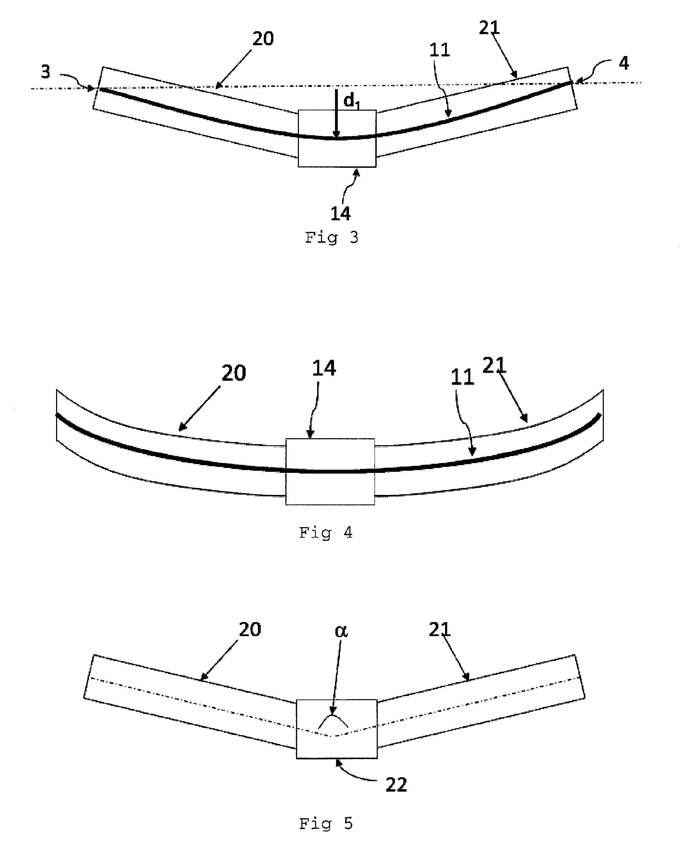

Fig 3 shows a solution according to one embodiment of the present invention to overcome the problems described in fig 2 whereby the gas insulated bushing 18 comprises a central part 14 adapted to be fixated to the wall or barrier and the conductor 11 passes through the part, and a first insulating tube 20 having one end attached to one side of the central part and the other end provided with a first end piece 8 or end flange for fixating 3 the conductor to the bushing, and a second insulating tube 21 having one end attached to an opposite side of the central part and the other end provided with a second end piece 9 or end flange for fixating 4 the conductor to the bushing. The center of the central part is shifted a distance d1 from a line between the fixation point 3 of the conductor on the first end piece and the fixation point 4 of the conductor on second end piece

Shifting the center of the central part, in relation to the direction of gravity, the naturally occurring static deflection of the conductor will make the conductor pass through the central part 14 in a more optimal position than without shifting. Preferably the conductor 11 should pass through the center of the central part 14. One should note that the straight line that passes through the fixation points does not have to be horizontal, for example, if the bushing is fixed on a wall at an angle or if it is tilted.

Fig 4 shows a bushing according to another embodiment of the present invention where the insulating tubes 20, 21 are bent or curved, possibly following the naturally occurring curve of a statically deflected conductor. The shape of the bend of the insulating tubes 20, 21 can take many forms. It would be advantageous to follow the naturally occurring curve of a statically deflected conductor but not required. The deflection curve of the conductor depends on many parameters such as tension of the conductor, stiffness of the conductor and the nature of the fixation points (if they can take up moments), etc. It may be advantageous if the insulating tubes 20, 21 are bent and follow a caternary curve when assembled with a central part 14.

Fig 5 shows a bushing according to another embodiment of the present invention where the longditudinal centerline of the insulating tubes 20, 21 are basically straight. The upper, in relation to gravity, angle (alpha) between the longditudinal centerlines of the insulating tubes 20, 21 is less than 180 deg and this has the result that the center of the central part 14 is at a distance from a line between the fixation points 3, 4.

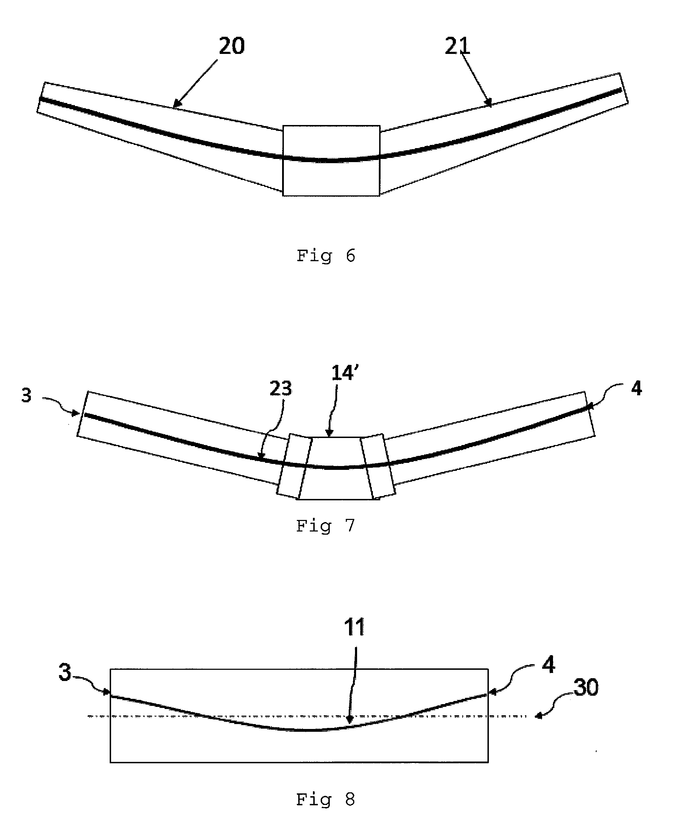

Fig 6 shows a bushing according to another embodiment of the present invention where the longditudinal centerline of the insulating tubes 20,21 are basically straight and the insulating tubes 20,21 have conical shapes. It is possible to combine fig 5 and 6 and have insulating tubes 20, 21 that are in parts conical shaped and in parts tubes with constant diameter shaped.

Fig 7 shows a bushing according to another embodiment of the present invention where the insulating tube attachment part of the central part 14' is angled so that face of the attachment part is at right angle to the longditudinal axis of the insulating tube. In the embodiment of fig 3 the face of the attachment part on both sides of the central part 14 are parallel and the attachment end of the insulating tubes 20, 21 are angled.
Any combinations of angles as in fig 7 or fig 3 are possible.

Fig 8 shows a bushing according to another embodiment of the present invention where the longditudinal centerline of the insulating tubes and the center of central part are arranged in a line. The tubes and the center is shown as one unit and the fixation points 3, 4 are shifted up from the radial center of the end pieses, above the center line of the bushing 30. Preferably the shift of the fixation points 3, 4 should be such that the conductor 11, with static deflection, passes through the center of the central part.

## Claims

1. A high voltage gas insulated bushing (18) for guiding an electrical current through a wall, the bushing comprising;
- a conductor (11), and
- a tubular central part (14) adapted to be fixated to the wall, and
- a first insulating tube (20) having one end attached to one side of the central part (14) and the other end provided with a first end piece (8) for fixating (3) the conductor to the bushing, and
- a second insulating tube (21) having one end attached to an opposite side of the central part and the other end provided with a second end piece (9) for fixating (4) the conductor to the bushing, and
- the conductor (11) extending through the insulating tubes and the central part (14),
**characterized in that**
the center of the central part (14) is arranged at a distance from a line between the fixation point (3) of the conductor on the first end piece (8) and the fixation point (4) of the conductor on second end piece (9).

2. A high voltage gas insulated bushing according to claim 1 wherein the distance between the center of the central part and the line between the fixation points of the conductor on the end pieces (3, 4) is between 3cm and 50cm.

3. A high voltage gas insulated bushing according to claims 1-2 wherein the insulation tubes (20, 21) are straight tubes.

4. A high voltage gas insulated bushing according to claims 1-3 wherein the center of the central part and radial center of the end pieces (8, 9) are on a straight line and at least one of the fixation points of the conductor on the end pieces are not on the radial center of the end piece (8, 9).

5. A high voltage gas insulated bushing according to claims 1-2 wherein the insulation tubes (20, 21) are conical tubes with the smallest diameter at the end pieces (8, 9).

6. A high voltage gas insulated bushing according to claim 3 or 5 wherein the longditudal centerlines insulating tubes are arranged at an angle (α) less than 180 deg.

7. A high voltage gas insulated bushing according to claim 6 wherein the angle (α) between the longditudinal center lines of the insulating tubes is 170-179,7 degrees.

8. A high voltage gas insulated bushing according to claim 6 or 7 wherein the angle (α) between the longditudinal center lines of the insulating tubes (20,21) is selected to compensate the static deflection of the conductor (11) so that the conductor passes through the radial center at the central part (14) in at least one point.

9. A high voltage gas insulated bushing according to claim 1 or 2 wherein the insulating tubes are curved to compensate the static deflection of the conductor (11).

10. A high voltage gas insulated bushing according to claim 9 wherein the insulating tubes are designed so that longditudal center line of the tube approximately follows a catenary curve.

11. A high voltage gas insulated bushing according to claims 1-10 wherein the bushing is arranged through a wall and the central part is fixated to the wall so that the center of the central part (14) is below a line between the fixation points (3, 4).
